# EUROPEAN PATENT APPLICATION

(11) **EP 4 679 758 A1**
(43) Date of publication of application: **14.01.2026**
(21) Application number: 25176419.7
(22) Date of filing: 14.05.2025
(51) Int. Cl.: H04L 5/00, H04W 52/14, H04W 52/34, H04W 72/0453, H04W 72/044

(54) **RESOURCE ALLOCATION**

(30) Priority: 11.07.2024 GB 202410112
(71) Applicant: Airspan IP Holdco LLC, Boca Raton, FL 33431 (US)
(72) Inventor: PARROTT, Stuart, Woodstock, OX20 1QD (GB); LOGOTHETIS, Andrew, High Wycombe, HP10 8DN (GB); SARAO, Honey Kanwar Singh, Slough, SL1 6AU (GB)
(74) Representative: D Young & Co LLP

(57) **Abstract**

There is provided an apparatus and a method. The apparatus is provided with receiving circuitry to receive, for each of a plurality of users, an initial resource allocation comprising an allocation of frequency resources to be used in a communication over a wireless downlink connection. The apparatus is also provided with transmission power budget allocation circuitry to allocate a portion of a total transmission power budget to each of the plurality of users. The apparatus is also provided with scheduling circuitry to perform a resource redistribution to obtain a revised resource allocation based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation.

## Description

The present invention relates to an apparatus and a method.

Communication over wireless downlink connections can involve allocation of resource to different users to enable transmission of data across the wireless downlink connections.

According to a first aspect of the present techniques there is provided an apparatus comprising:
receiving circuitry configured to receive, for each of a plurality of users, an initial resource allocation comprising an allocation of frequency resources to be used in a communication over a wireless downlink connection;
transmission power budget allocation circuitry configured to allocate a portion of a total transmission power budget to each of the plurality of users; and
scheduling circuitry configured to perform a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.

According to a second aspect of the present techniques there is provided a method comprising:
receiving, for each of a plurality of users, an initial resource allocation comprising an allocation of frequency resources to be used in a communication over a wireless downlink connection;
allocating a portion of a total transmission power budget to each of the plurality of users; and
performing a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.

According to a third aspect of the present techniques there is provided an apparatus comprising:
means for receiving, for each of a plurality of users, an initial resource allocation comprising an allocation of frequency resources to be used in a communication over a wireless downlink connection;
means for allocating a portion of a total transmission power budget to each of the plurality of users; and
means for performing a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.

The present techniques will be described further, by way of example only, with reference to configurations thereof as illustrated in the accompanying drawings, in which:
Figure 1 schematically illustrates a base station with uplink and downlink connections according to some configurations of the present techniques;
Figure 2 schematically illustrates an apparatus according to some configurations of the present techniques;
Figure 3 schematically illustrates a frame according to some configurations of the present techniques;
Figure 4 schematically illustrates allocated resources according to some configurations of the present techniques;
Figure 5 schematically illustrates scheduling according to some configurations of the present techniques;
Figure 6a schematically illustrates scheduling according to some configurations of the present techniques;
Figure 6b schematically illustrates scheduling according to some configurations of the present techniques;
Figure 7 schematically illustrates scheduling according to some configurations of the present techniques;
Figure 8 schematically illustrates determination of potential allocations according to some configurations of the present techniques;
Figure 9 schematically illustrates an apparatus according to some configurations of the present techniques;
Figure 10 schematically illustrates determination of potential allocations according to some configurations of the present techniques;
Figure 11 schematically illustrates an amplifier according to some configurations of the present techniques;
Figure 12 schematically illustrates a sequence of steps carried out according to some configurations of the present techniques;
Figure 13 schematically illustrates a sequence of steps carried out according to some configurations of the present techniques; and
Figure 14 schematically illustrates a sequence of steps carried out according to some configurations of the present techniques.

According to some configurations of the present techniques there is provided an apparatus. The apparatus comprises receiving circuitry configured to receive, for each of a plurality of users, an initial resource allocation comprising an allocation of frequency resources to be used in a communication over a wireless downlink connection. The apparatus further comprises transmission power budget allocation circuitry configured to allocate a portion of a total transmission power budget to each of the plurality of users. The apparatus further comprises scheduling circuitry configured to perform a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.

During downlink communication, resources may be initially allocated between plural users to allow simultaneous transmission of data from a base station to a plurality of user devices. Whilst the apparatus may perform transmission using one or a plurality of beams, the apparatus is configured, for at least one beam to transmit data to a plurality of users using different resources within that beam. During periods of high throughput by each of the plurality of users, the utilisation of the available resources may saturate. However, during periods of lower throughput by some or all of the plurality of users, there may be additional unused resources allocated to the users. As a result of this redundancy, the apparatus may draw unnecessary input power, for example, to amplify a carrier wave across a range of unutilised frequencies or to amplify a carrier wave across a range of unutilised time windows. For a given transmission window defined in both frequency and time, where the unutilised resources happen, for example, by random chance, or due to an extremely low throughput, to fall within a same time window for all users, input power consumption may be reduced by turning one or more portions of a transmission circuit off during that same time window. The term "input power" as used herein refers to the power drawn in order to transmit information according to a resource allocation. The transmitted power, otherwise referred to as the transmission power, refers to the power of the output signal according to the resource allocation. The inventors have recognised that the opportunities to save input power can be improved by rescheduling the resources allocated to at least one of the users in the frequency domain. For example, a range of frequencies that are utilised by at least one user could be shifted, increased, or decreased to modify the distribution of resources per unit time for the at least one user or to allow communication resources to be repurposed by another user thereby enabling the distribution of resources per unit time for the another user.

For example, throughput per unit time could be increased by allocating a greater range of frequencies as the frequency allocation for a user whilst ensuring the transmission power budget allocation for that user is respected. The requirement for the total transmission power budget allocation for that user to be respected results in the either a reduction in the input power drawn per unit frequency, or a reduction in the number of time windows allocated for transmission. Alternatively, the range of frequencies may be shifted and/or reduced in order to focus the user's transmission power budget allocation in order to allow the user to utilise a portion of the available frequency spectrum having a particularly high signal quality, thereby increasing the overall throughput per unit of time. By increasing the throughput per unit time available to the user, the amount time required to transmit the downlink communication may be reduced. In turn, this increases the likelihood that one or more time windows may be unutilised for all users, thereby allowing the apparatus to take advantage of potential input power savings by turning off one or more portions of the transmission circuit. The resource allocation may be performed for one user, a subset of the users, or all of the users. In an ideal scenario, user resources could be transmitted at an optimum transmission power to maximise throughput and minimise input power. It is not always possible as the overall transmission power is limited, for example, by transmission regulations. Hence, the apparatus is provided with a total power budget that can be distributed between users. This portion of the total power budget allocated to each user affects the potential resource allocations that can be provided by the scheduling circuitry. For example, where an otherwise optimal allocation for a user suffers from particularly high interference, the user may not be allocated a sufficiently high portion of the power budget to make use of that allocation whilst still achieving a required throughput. By basing the redistribution on the portion of the total power budget, the scheduling circuitry is able to obtain a revised allocation in which the total power budget is respected.

In some configurations the initial resource allocation comprises, for each of the plurality of users, an allocation of resources over a predetermined frequency range; and the scheduling circuitry is configured to identify available frequency resources within the predetermined frequency range, and perform the resource redistribution to reallocate at least some resources allocated in the initial resource allocation to utilise the available frequency resources. The scheduling circuitry may be configured to distribute the resources according to a particular scheduling policy. For example, the scheduling circuitry may be configured to distribute the resources in order to ensure a greatest possible utilisation of the frequency resources or to avoid one or more particular frequency bands. Further details on possible allocations will be discussed below.

In some configurations the initial resource allocation comprises, for each of the plurality of users, an allocation of resources over a predetermined time window comprising a plurality of sub windows; and the scheduling circuitry is responsive to the available frequency resources meeting a threshold condition, to perform the resource redistribution to free up at least one sub window of the plurality of sub windows for all of the plurality of users. The scheduling circuity determines for each user whether an alternative resource allocation is available that reduces the number of time windows required for that user. As discussed, the scheduling circuitry may achieve this by modifying the users resource allocation to provide a greater range of frequencies to the user, thereby enabling the same data throughput using fewer sub windows in time. Alternatively, or in addition, the scheduling circuitry may change an encoding used for the data to allow a greater amount of data to be transmitted in a shorter amount of time. In both cases, the scheduling circuitry allocates the resources for each of the plurality of users such that the unused sub window(s) comprise at least one common sub window for all of the plurality of users. As a result, there is no need for the apparatus to transmit during this unused sub window, resulting in a reduced input power requirement for the apparatus.

In some configurations the apparatus is provided with amplification circuitry configured to amplify a signal for transmission, the signal comprising data from each of the plurality of users according to the revised resource allocation, wherein the amplification circuitry is configured to draw a reduced input power during the at least one sub window. The amplification circuitry may be a multi-stage amplifier and the reduction in the drawn input power may result from one or more stages of the multi-stage amplifier being powered down during the sub window. The approach of symbol blanking, i.e., the use of reduced power during transmission times associated with one or more unallocated symbols (time sub windows) reduces the overall power drawn by the amplification circuitry. The reduced input power may result from the power amplifier or one or more stages of the amplification circuitry being shut down. Alternatively, the amplification circuitry or one or more stages of the amplification circuitry may be operated on a reduced input power.

The amplification circuitry can, in some configurations, determine whether to draw the reduced input power by sensing a pre-amplified signal provided at the data input (i.e., the to be amplified input) to the amplification circuitry. In some configurations, the amplification circuitry is coupled to the scheduling circuitry and the scheduling circuitry is configured to provide the amplification circuitry with a sub window allocation identifying the at least one sub window. The amplification circuitry is coupled to the scheduling circuitry and can therefore determine, from the sub window allocation provided by the scheduling circuitry, when the amplification circuitry is to be operated in at the reduced input power. This allows the input power provided to the amplification circuitry to be controlled with greater accuracy and reduces the requirements for circuitry to infer the input power requirements from the pre-amplified signal.

In some configurations the initial resource allocation comprises modulation coding scheme information identifying an initial modulation coding scheme associated with each of the plurality of users; and the scheduling circuitry is configured to select a revised modulation coding scheme for at least the modified frequency allocation. The modulation coding scheme defines the amount of information that is included within a smallest unit of resource allocation in both time and frequency. For example, the smallest unit of resource allocation may be a single Orthogonal Frequency Division Multiplexing (OFDM) symbol with the modulation coding identifying how many bits of information are encoded in each symbol. The modulation coding scheme may also identify the number of redundant data bits added to improve robustness to signal noise and interference. A signal incorporating more data with less redundancy would likely be more susceptible to signal interference and noise and may therefore require a greater transmission power to ensure that the signal is received correctly.

In some configurations the scheduling circuitry is configured to select, as the different range of frequencies, a smaller range of frequencies than the allocation of frequency resources allocated to the at least one user in the initial resource allocation. The smaller range of frequencies may utilise a modulation coding scheme that encodes a greater amount of data in each symbol. As a result, the total throughput that can be achieved using the modified allocation may be greater than or equal to the throughput that can be achieved using the initial allocation with the transmission power budget for that user allocated over the smaller frequency range. Distributing the transmission power budget over the smaller range of frequencies allows a greater peak transmission power per symbol to be used, thereby compensating for the greater susceptibility to interference and noise that results from encoding the greater amount of data in each symbol. The inventors have recognised that, in general, the relationship between input power and transmission power per symbol is a non-linear relationship. As a result of this non-linearity, the power efficiency of the amplifier (defined as the total transmission power divided by the total input power) is generally better when the power amplifier is operating at a higher transmission power. In other words, for a given transmission power budget allocated to a user, an amount of input power that is wasted in order to achieve the transmission power budget is lower when the resource allocation utilises a smaller range of frequencies at a higher transmission power than when the resource allocation utilises a greater range of frequencies at lower transmission power. Hence, by reducing the size of the frequency range, the scheduling circuitry can cause the power amplification circuitry to operate more efficiently reducing the total input power requirements of the transmission.

In some configurations the scheduling circuitry is configured to select, as the different range of frequencies, a larger range of frequencies than the allocation of frequency resources allocated to the at least one user in the initial resource allocation. The allocation using a larger range of frequencies redistributes the resources in frequency so that the time requirements on the resource allocation are not as strict. As discussed, this approach enables the number of sub windows of time (e.g., OFDM symbols) allocated to a user to be reduced, thereby enabling the amplification circuitry to make greater use of symbol blanking techniques.

Whilst, in some configurations, the change in frequency range may comprise a redistribution of allocated resources using a same modulation coding scheme as in the initial allocation, in some configurations the revised modulated coding scheme encodes a greater amount of information per frequency unit than the initial modulation coding scheme allocated to the at least one user in the initial resource allocation. The combination of modifying the modulation coding scheme and providing the modified frequency allocation provides a particularly flexible way of improving power efficiency in downlink communications.

In some configurations the revised modulation coding scheme is determined based on simultaneous consideration of both of a quality of the wireless downlink connection and a transmission power spectrum distribution of the portion of the total transmission power budget allocated to each of the plurality of users. Where the quality of the wireless downlink connection is poor, for example, due to high interference or a poor line of sight between the apparatus and the user equipment to which the signal is transmitted, the modulation coding scheme may need to be chosen to incorporate fewer bits of information and to improve redundancy. On the other hand, where the quality of the wireless downlink connection is high, a modulation coding scheme can be chosen that incorporates a greater number of bits of information. In some configurations, the quality of the wireless downlink connection may vary dependent on the frequency resources used. However, the modulation coding scheme may be fixed for all resources allocated to the user. In such a configuration, the scheduling circuitry may be configured to select the modified resource allocation to avoid ranges of the frequency spectrum having a poor quality. The frequency resource allocated to the user may be selected in order of decreasing signal quality, with the frequency resources associated with the highest signal quality allocated first with sequentially lower quality frequency resources allocated subsequently. The signal quality observed by different users may differ (for example, due to differences in propagation path and/or differences in the sources of interference observed by different users). In some configurations, the resources may be allocated to each of the users sequentially (i.e., allocated in turn to each of the users) based on their observed signal quality.

The scheduling circuitry may be configured to implement any algorithm for resource scheduling. In some configurations the scheduling circuitry is configured to select the revised resource allocation from a plurality of potential resource allocations each defining a corresponding modified frequency allocation for each of the plurality of users. The scheduling circuitry may be arranged to generate the plurality of potential resource allocations or may be provided with storage circuitry configured to store the plurality of possible resource allocations with the revised resource allocation selected from amongst the plurality of possible resource allocations that are stored in the storage circuitry.

In some configurations the plurality of potential resource allocations comprises all possible resource allocations. In alternative configurations, the plurality of potential resource allocations comprises a subset of all possible resource allocations. For example, the plurality of potential resource allocations may exclude at least one possible resource allocation. In some configurations the apparatus may be configured to store a library of possible resource allocations for different users having different throughput requirements and power budget allocations and the scheduling circuitry may be configured to search the library for an appropriate one or more resource allocations based on the power budget allocated to each of the users, the signal quality, and the data throughput requirements.

In some configuration the quality of the wireless downlink connection identifies a quality of different regions of an available frequency range; and the plurality of potential resource allocations comprises a first potential resource allocation comprising one of the different regions having a highest quality, and a sequence of further potential resource allocations, each one of the sequence of further potential resource allocations comprising a sequentially next one of the different regions having a next highest quality. The information defining the quality of the wireless downlink connection may explicitly identify a quality, e.g., a signal to interference and noise ratio of each frequency range. Alternatively, the information defining the quality of the wireless downlink connection may identify a highest quality of one of the frequency ranges having a best signal to interference and noise ratio along with an indication, for each of the available frequency ranges, whether that frequency range has a quality that falls within one of a set of signal to interference and noise ranges, the set of signal to interference and noise ratio ranges defined based on the best signal to interference and noise ratio. For example, one of the frequency ranges may be identified as belonging to a first signal to interference and noise ratio ranges, if the signal to interference and noise ratio of that frequency range falls within a predetermined percentage of the best signal to interference and noise ratio (e.g., within 1% of it, within 2% of it, or within 5%, etc.). A second signal to interference and noise ratio range may be defined, for example, as being from the end of the first signal to interference and noise ratio range to a further percentage (e.g., 10%, 20%, etc.). The signal to interference and noise ratio range may therefore be encoded in an indication received from the user equipment without having to explicitly specify the signal to interference and noise ratio for all frequency ranges.

Based on the signal quality information, the scheduling circuitry may identify a plurality of possible signal resource allocations by initially allocating those resources having the greatest signal to interference and noise ratio. For example, a user may be allocated the frequency range that, according to the quality information. Once an initial allocation has been determined as described, the scheduling circuitry may create a plurality of further allocations by allocating further frequency resources. The further frequency resource may be allocated, for example, in order of decreasing quality. Some of the plurality of potential resource allocations will use the entire available set of time sub-windows, other potential resource allocations will use a subset of the entire available set of time sub-windows.

Regardless as to how the scheduling circuitry determines the plurality of possible allocations, in some configurations the scheduling circuitry is configured to estimate, for each of the plurality of potential resource allocations, a total communication throughput based on a corresponding transmission power spectrum distribution of the portion of the total transmission power budget allocated to each of the plurality of users across the corresponding modified frequency allocation; and the scheduling circuitry is configured to select, as the revised resource allocation, one of the plurality of potential resource allocations having, for each of the plurality of users, an estimated total communication throughput greater than or equal to an estimate throughput of the initial resource allocation. Some potential allocations, for example, those using only a single one of the frequency ranges, dependent on the total data throughput required and the quality of that frequency range, may not achieve a sufficient throughput to allow the user's data to be transferred. These potential may be discarded or, in a case where there are no potential allocations that will achieve the desired throughput, ranked in terms of available throughput. The revised resource allocation is therefore selected as one of the potential resource allocations that provides sufficient throughput for all of the users.

In some configurations the scheduling circuitry is further configured to estimate, for each of the plurality of potential resource allocations, the communication throughput based on the modulation coding scheme associated with the corresponding modified frequency allocation. For example, once a resource allocation has been selected that is able to achieve the desired throughput, the throughput may be estimated for a range of different possible modulation coding schemes and a modulation coding scheme may be selected for the modified frequency allocation. The modulation coding scheme may be selected to be the best possible modulation coding scheme, for example, the one that allows the greatest amount of information to be encoded whilst ensuring, based on the channel quality information and the portion of the total transmission power budget allocated to that user, that the signal will be decodable by the user equipment. In some configurations, the modulation coding scheme is selected using one or more lookup tables which may be coded in advance and stored by the base station. Some of the plurality of potential resource allocations will use the entire available set of time sub-windows, other potential resource allocations will use a subset of the entire available set of time sub-windows.

In some configurations the information indicative of a quality of the wireless connection comprises a plurality of signal to interference and noise ratios, each indicative of a reference signal received from a respective communication device associated with a respective one of the plurality of users. In other words, the quality of the wireless downlink connection may therefore be defined a per user basis. For example, the quality of the wireless downlink connection may be defined based on feedback information transmitted from a user device indicating a quality of the wireless signal that it has received from the apparatus. For example, the scheduling circuitry may allocate only an available frequency range having the highest signal to interference and noise ratio for each user. The frequency ranges may be allocated on a per user basis, for example, a first user may be allocated the frequency range that, according to the quality information provided by that user, has the best signal to interference and noise ratio. A second user may then be allocated the frequency range that, according to the quality information provided by the second user, has the best signal to interference and noise ratio. Where the same frequency range is required for each of the first user and the second user, the scheduling circuitry may be configured to favour one user based on a particular criterion (e.g., a user requiring a highest throughput, a randomly selected user, alternating between users on a per slot basis or a per frame basis, etc.). Once an initial allocation has been determined as described, the scheduling circuitry may create a plurality of further allocations by allocating further frequency resources to each of the users in turn. For each frequency allocation, the scheduling circuitry may determine a modulation coding scheme.

In some configurations the scheduling circuitry is configured to select, as the revised resource allocation, one of the plurality of potential resource allocations having a greatest power efficiency. In general, there may be plural potential resource allocations that meet the throughput requirements for all of the plurality of users. However, and as discussed above, different resource allocations may have different input power requirements. The overall input power consumption for the downlink transmission can therefore be reduced by selecting the potential resource allocation having the power efficiency. As a result, in some configurations, the resource allocation is the one of the plurality of potential resource allocations that meets the data throughput requirements and that provides a greatest power efficiency.

In general, the revised resource allocation comprises control data suitable for being used by communications circuitry to control a resource allocation in a downlink data transmission. The transmission of the data may be performed by the apparatus itself, for example, in some configurations the apparatus comprises communication circuitry configured to transmit the communication for each of the plurality of users according to the revised resource allocation. In other configurations, a further apparatus may be tasked with the transmission of the data. For example, the apparatus may be configured to transmit the revised resource allocation to a further apparatus or to store the revised resource allocation to a known location to be read by the further apparatus. The further apparatus may be provided with communication circuitry to transmit the downlink data to each of the plurality of users according to the revised resource allocation.

In some configurations the apparatus comprises a plurality of beamforming antenna, wherein the scheduling circuitry is configured to perform the resource redistribution for each of the plurality of antenna. The scheduling may therefore be performed for a plurality of users using the plurality of beamforming antenna with each of the beamforming antennas being configured to transmit the downlink communication for one or a plurality of users and with one of the plurality of beamforming antenna transmitting downlink data to a plurality of users.

In some configurations the transmission power budget allocation circuitry is configured to allocate the total transmission power budged based on the data throughput requirements of each of the plurality of users. The transmission power allocation may be based on a proportional fair scheduling. Proportional fair scheduling tries to strike a balance between fairness (ensuring each user gets a fair share) and efficiency (maximizing the total throughput or system performance). Resources may be allocated in such a way that each user's allocated share is proportional to their demand. This means that users with higher demands may get more resources, but not excessively more than those with lower demands. Alternatively, the users may be allocated a transmission power budget according to a fair share policy or to achieve a guaranteed quality of service for each of the users. A quality of service for the users may be determined and/or identified based on a user group to which the users belong with different user groups being associated a different quality of service. It will be readily apparent to the skilled person that alternative algorithms may be used to allocate the transmission power budget to the plurality of users.

In some configurations the initial resource allocation identifies, as the allocation of frequency resources, a set of downlink resource blocks allocated for each of the plurality of users. A resource block is the smallest amount of resources that can be allocated to a single user and comprises an allocation of a range of frequencies and a range of time sub-windows.

In some configurations the set of downlink resource blocks is one of: a contiguous set of the downlink resource blocks; and a non-contiguous set of the downlink resource blocks. The contiguous or non-contiguous downlink resource blocks are, respectively, contiguous in frequency or non-contiguous in frequency.

In some configurations the modified frequency allocation comprises, for each of the plurality of users, one of: a modified set of contiguous downlink resource blocks; and a modified set of non-contiguous downlink resource blocks.

Some configurations of the present techniques will now be described with reference to the accompanying figures.

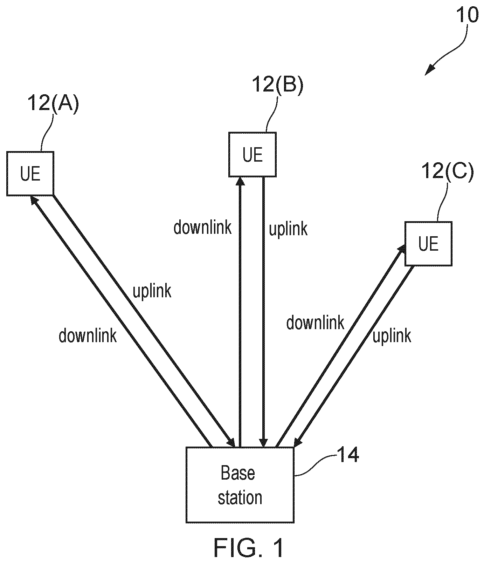

The apparatus for which the techniques described herein can be utilised can take a variety of forms. As illustrated in figure 1, the apparatus could be a base station 14 that communicates with a plurality of items of user equipment (UE) 14, for example, first user equipment 12(A), second user equipment 12(B), and third user equipment 12(C). The user equipment could be carried by a pedestrian or in a vehicle. Alternatively, the user equipment 12 could be mounted on a vehicle. The vehicle could take a variety of forms. For example, the techniques could be applied in respect of trains, where the base stations 14 may be spread out along a region relatively close to the track. Alternatively, the vehicle could be an aircraft, such as the airplane or a helicopter. The user equipment (UE) 12 is able to communicate with a base station 14 which may be one of a network of base stations provided to enable the user equipment 12 to connect to different base stations during movement of the user equipment in order to seek to maintain a communication link that can between the base station 14 and the user equipment 12.

The apparatus described herein, which may take the form of the base station 14, may be arranged to perform scheduling a downlink transmission and may also perform scheduling for an uplink transmission. The uplink transmission is a transmission from the user equipment 12 to the base station 14 and the downlink transmission is a transmission from the base station 14 to the user equipment 12. The base station 14 is arranged to transmit downlink communications to each of a plurality of users with different frequency resources allocated to each of the plurality of users.

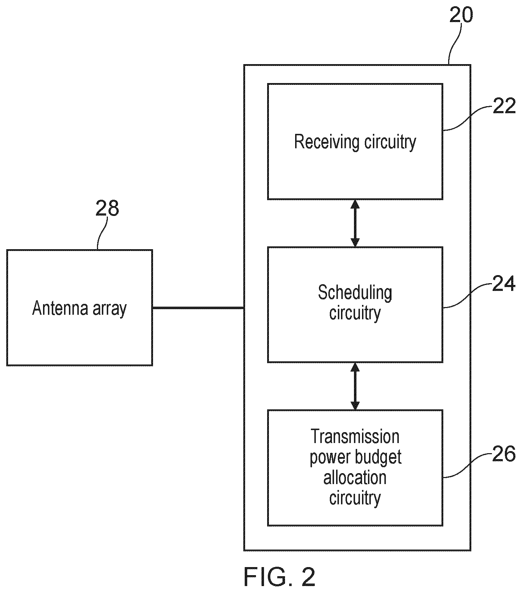

Figure 2 schematically illustrates an apparatus 20 (e.g., a base station) configured for wireless communication with a plurality of items of user equipment (for example user equipment 12). The apparatus 20 may be coupled to an antenna array 28, which is arranged to generate a plurality of beams to transmit and receive signals from the plurality of terminals, under the control of scheduling circuitry 24. In particular, the scheduling circuitry 24 controls the antenna array 28 to transmit information (referred to as downlink transmissions) to the plurality of terminals (items of user equipment) on one or more transmission beams, and to receive information (referred to as uplink transmissions) transmitted by the plurality of terminals on one or more reception beams.

The transmission beams and reception beams may be directional, so that they are only visible to terminals in a given direction (e.g. within a given angular range, the width of the range being dependent on how broad the beam is) - e.g. a transmission beam is considered to be "visible" to a given terminal if data transmitted using the transmission beam can be received by the terminal's antenna circuitry, and a reception beam is considered to be "visible" to the given terminal if the base station can receive data, transmitted by the terminal, on the reception beam. The number of beams which can be used at any given time by the antenna array may be limited based on hardware constraints associated with the specific circuitry of the antenna array 28, and/or due to certain regulatory constraints, some jurisdictions may require that the number of transmission beams (downlink beams) in operation at any given time be limited to a certain number. In some cases, regulatory constraints may limit the number of beams further (e.g. to a lower number) than the hardware constraints.

The antenna array 28 is made up of a plurality of antenna elements, and the apparatus 20 may further comprise beamforming circuitry (not shown) to generate the one or more reception and transmission beams, and beam steering circuitry (not shown) to steer (e.g. rotate) the beams.

The scheduling circuitry 24 controls the antenna array 28 to communicate with the plurality of terminals in predetermined time slots each of which comprises plural resource block groups distributed across a range of frequencies. In particular, the antenna array transmits downlink data to the one or more terminals in transmission time slots (also referred to as downlink slots or transmission slots) and does not transmit data during reception time slots (also referred to as uplink slots or reception slots), which are instead reserved for reception of uplink transmissions that are transmitted by the one or more terminals.

Accordingly, since both the number of beams that can operate at a given time and the time slots during which the base station can transmit or receive information are limited, there is a need to determine a schedule for resources that will be allocated to allow each of the plurality of terminals to transmit and receive data, and to determine the wireless communication resources (e.g. including which beam, which frequency ranges, and which time ranges) to be employed for communication with each terminal. This is particularly the case when there are a large number of terminals in communication with a single base station, especially if these terminals are of a sufficiently large number and/or located such that they each user cannot be allocated an individual beam.

Hence, the apparatus 20 of Figure 2 includes scheduling circuitry 24. The scheduling circuitry 24 is arranged to perform a downlink scheduling process to determine downlink data allocations indicating, for a given downlink slot, which terminals the base station will transmit downlink data to and which wireless resources will be used to transmit the downlink data. Similarly, the scheduling circuitry may be configured to perform an uplink scheduling process to determine uplink data allocations indicating, for one or more uplink slots, which terminals the base station expects to receive uplink information from, and which wireless resources it expects to be used. It will be appreciated that, while the scheduling circuitry 24 shown in Figure 2 may be configured to perform both uplink scheduling and downlink scheduling, in alternative configurations, separate uplink scheduling circuitry may be provided.

In addition to the scheduling circuitry 24, the apparatus 20 is provided with receiving circuitry that is arranged to receive an initial resource allocation for each of a plurality of users. The initial resource allocation may be derived in any manner and may be derived independently for each of the plurality of users. The apparatus 20 is also provided with transmission power budget allocation circuitry 26 which is arranged to allocate a portion of a total transmission power budget to each of the plurality of users. As discussed above, the portion of the allocated transmission power budget may be based, for example, on a throughput requirement of the user and may be based on a fair share policy and/or a quality of service associated with the user.

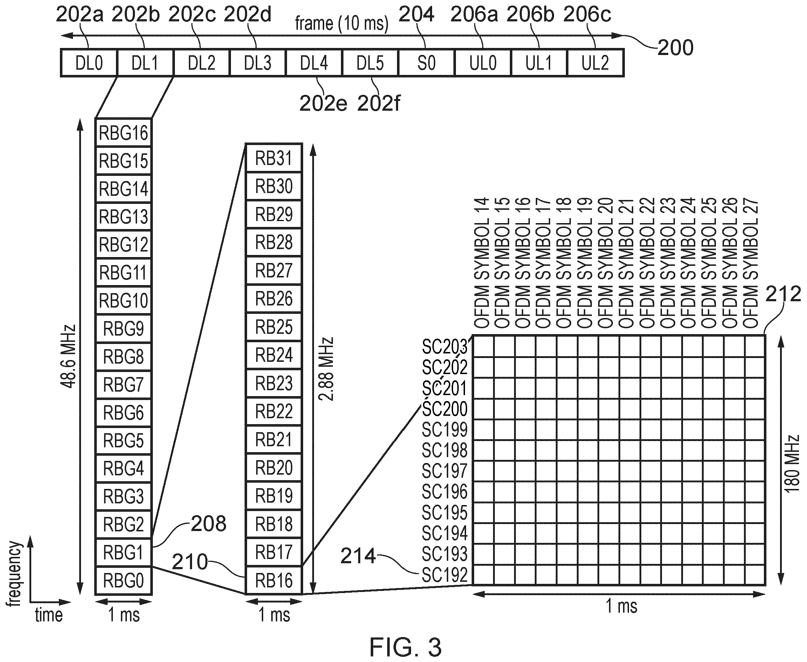

As noted above, the apparatus 20 is configured to communicate with the plurality of terminals in predetermined transmission time slots (downlink slots) and reception time slots (uplink slots). Figure 3 shows an example of how these time slots may be arranged within a time period referred to as a frame. In the example of Figure 3, the uplink slots and downlink slots are separated in time using the technique of Time Division Duplex (TDD). In alternative examples an alternative duplex scheme may be used. For example, the uplink slots and the downlink slots may be separated in frequency employing Frequency Division Duplex (FDD). In the FDD case, a downlink frame comprises only downlink slots, and the uplink frame comprises only uplink slots.

In the example of Figure 3, a frame 200 is a 10 ms time period and is divided into ten slots. In particular, the ten slots in this example comprise six downlink slots 202a-202f, three uplink slots 206a-206c and one special/reserved slot 204. The downlink slots represent periods of time during which downlink communication may be performed. In particular, the user equipment 12 is configured to receive (download) downlink data (also referred to as downlink information) from the base station 14 during the downlink slots. On the other hand, the uplink slots represent periods of time during which uplink communication may be performed. In particular, the user equipment 12 is configured to transmit (upload) uplink data (uplink information) to the base station during the uplink slots. The special/reserved slot S0 204 is used to provide some separation between downlink communication and uplink communication, and hence allow time for the wireless communication circuitry to reconfigure its operation between transmission and reception.

As shown in Figure 3, each slot - including both downlink slots 202 and uplink slots 206 - comprises seventeen resource block groups (RBGs) 208 in the frequency domain. Each RBG 208 represents a portion of the frequency range used by the base station to communicate with the plurality of terminals. In in the example of Figure 3, the total frequency range is 48.6 MHz, and each RBG 208 covers a portion of that range - in this particular example, the first 16 RBGs (RBG0 to RBG15) each cover 2.88 MHz, while the 17^{th} RBG (RBG16) covers a range of 2.52 MHz (not shown in figure). However, it will be appreciated that this is just one example of the frequency ranges that could be covered by each of the RBGs, and in other examples all RBGs may cover an equal portion of the frequency range. Each RBG 208 is, in turn, divided into resource blocks (RBs) 210 in the frequency domain, each covering a portion of the frequency range covered by the RBG 208 - in the example of Figure 3, each RBG 208 other than the last one (RGB16) comprises sixteen RBs 210 (the last one, RBG16, comprises 14 RBs (not shown in figure)). Each RB 210 covers a frequency range of 180 kHz. Finally, each RB 210 is further divided in both the time domain and the frequency domain. In particular, each RB 210 comprises fourteen orthogonal frequency domain multiplexing (OFDM) symbols 212 in the time domain and 12 subcarriers (SC) 214 in the frequency domain.

Different RBGs 208 within a single slot can be allocated for communication with different terminals if desired, and the wireless communication resources identified for each data allocation will indicate the RBGs allocated. It is also possible to allocate individual RBs 210 to different terminals - in which case the wireless communication resources identified for each data allocation will indicate the relevant RBs 210 allocated. Whilst each subcarrier/OFDM symbol unit (denoted by the individual squares in the right hand side of Figure 3) may carry separate items of information, an individual RB is the smallest addressable unit in time and frequency, and hence the smallest individually allocable unit of the frequency spectrum is the resource block. When an allocation is performed in an RB, all subcarriers are used, but not all OFDM symbols need to be used. Typically, allocation in time starts from left (smallest OFDM symbol number) and increases to the right (highest OFDM symbol number). The number of symbols used is indicated by the scheduler.

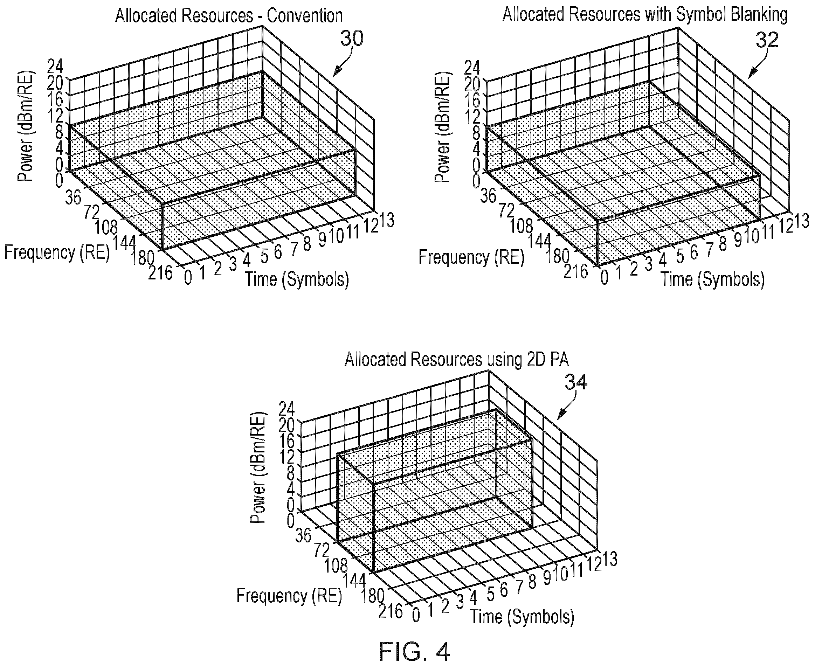

Figure 4 schematically illustrates a range of different resource allocations that may be provided according to some configurations of the present techniques. The three illustrated resource allocations include a first resource allocation 30, a second resource allocation 32, and a third resource allocation 34. Each of the illustrated resource allocations shows a time allocation and a frequency allocation. The time allocation is shown on the timescale of a single slot (for example a downlink slot 202 or an uplink slot 206) divided into 14 OFDM symbols in the time domain, and on the frequency scale of a single resource block group comprising 16 resource blocks each divided into 12 subcarriers in the frequency domain.

The first resource allocation 30 schematically illustrates a resource allocation in which fifteen resource blocks are allocated (180 subcarriers) with all 14 OFDM symbols allocated for each of the subcarriers. The transmission power allocated for each OFDM symbol and over each subcarrier is approx. 12 dBm per resource element (RE). The total transmission power required for the first resource allocation 30 can be calculated by integrating the power over all resources allocated according to the first resource allocation.

The second resource allocation 32 schematically illustrates a resource allocation in which 18 resource blocks are allocated (216 subcarriers) with only 12 of the 14 OFDM symbols allocated for each of the subcarriers. The transmission power allocated for each OFDM symbol and over each subcarrier is approx. 12 dBm/RE. The total transmission power required for the second resource allocation 32 can be calculated by integrating the power over all resources allocated according to the first resource allocation.

The third resource allocation 34 schematically illustrates a resource allocation in which six resource blocks are allocated (72 subcarriers) with only 12 of the 14 OFDM symbols allocated for each of the subcarriers. The transmission power allocated for each OFDM symbol and over each subcarrier is approx. 16 dBm/RE. The total transmission power required for the third resource allocation 34 can be calculated by integrating the power over all resources allocated according to the first resource allocation.

In the illustrated configuration, the total transmission power for each of the first resource allocation 30 and the second resource allocation 32 is the same. However, the total transmission power for the third resource allocation 34 is lower. In the third resource allocation 34, a same throughput could potentially be achieved using resources by increasing the modulation coding scheme associated with the resource allocation. Furthermore, the second and third resource allocations may be able to utilise further power savings as, for each of these resource allocations, there exists a set of sub windows in time (OFDM symbols) for which no data is being transmitted. The apparatus may therefore reduce the power drawn by amplification circuitry over this range to improve power efficiency. The use of symbol blanking would not be possible in the first resource allocation as the amplifier is required to draw power over all sub-windows of time.

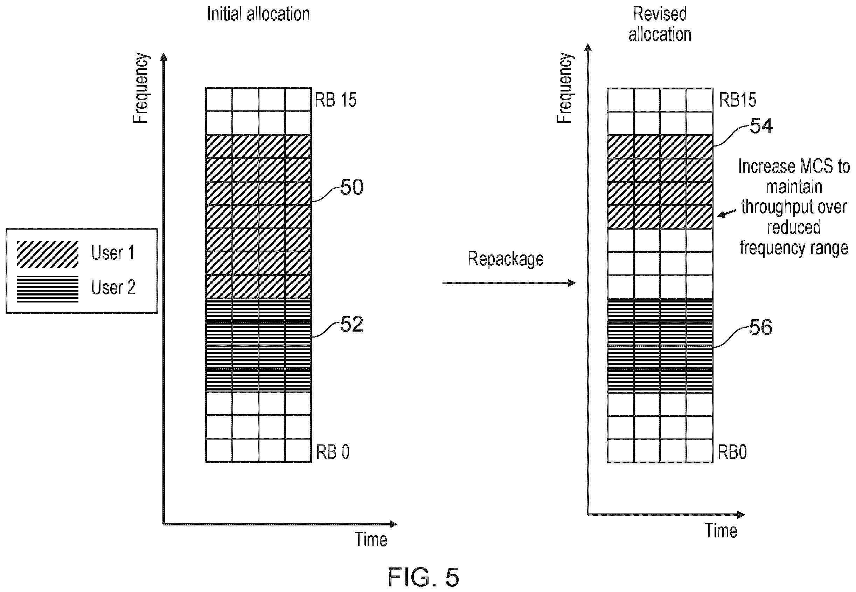

Figure 5 schematically illustrates an example of a revised resource allocation for at user based on an initial scheduling. The figure illustrates an initial allocation and a revised allocation. Each allocation shows a single resource block group comprising 16 resource blocks and 4 symbols (sub-windows of time). It will be readily apparent to the skilled person that whilst only four symbols are illustrated, in alternative configurations a greater number of symbols could be provided. The initial allocation comprises an initial resource allocation for a first user 50 and an initial allocation for a second user 52. The initial allocation for the first user 50 comprises all four symbols for resource blocks RB7 to RB13. The initial allocation for the second user 52 comprises all four symbols for resource blocks RB3 to RB6. The scheduling circuitry receives the initial allocation and allocates a portion of a total transmission power budget to each of the users. For example, each user may be allocated a same portion of the total transmission power budget. Alternatively, the first user may be allocated a greater portion of the total transmission power budget, for example, to reflect a greater required throughput for the first user. The scheduling circuitry determines a revised resource allocation and repackages the data. In the illustrated configuration, the revised allocation for the first user 54 comprises all four symbols for resource blocks RB10 to RB13. In other words, a reduced range of frequency resources has been provided to the first user. The required throughput is achieved by increasing the modulation coding scheme (MCS) to allow a greater amount of information to be transmitted per resource. The portion of the power budget for the first user is distributed over the four resource blocks in the revised allocation for the first user 54 rather than the eight resource blocks of the initial allocation for the first user 50. Therefore, the revised allocation for the first user 54 may allow an amplifier to work in a more efficient power region resulting in greater overall efficiency and requiring less input power over the revised allocation of the first user 54. The revised allocation of the second user 56 is identical to the initial allocation of the second user 52.

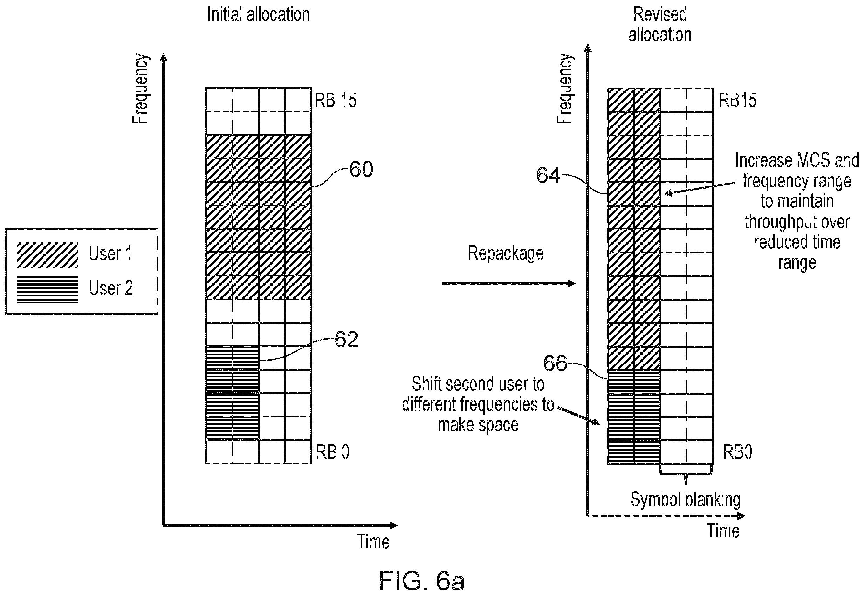

Figure 6a schematically illustrates another example of a revised resource allocation for at user based on an initial scheduling. The figure illustrates an initial allocation and a revised allocation. Each allocation shows a single resource block group comprising 16 resource blocks and four symbols (sub-windows of time). It will be readily apparent to the skilled person that whilst only four symbols are illustrated, in alternative configurations a greater number of symbols could be provided. The initial allocation comprises an initial resource allocation for a first user 60 and an initial allocation for a second user 62. The initial allocation for the first user 60 comprises all four symbols for resource blocks RB7 to RB13. The initial allocation for the second user 62 comprises the first two symbols for resource blocks RB2 to RB5. The scheduling circuitry receives the initial allocation and allocates a portion of a total transmission power budget to each of the users. For example, each user may be allocated a same portion of the total transmission power budget. Alternatively, the first user may be allocated a greater portion of the total transmission power budget, for example, to reflect a greater required throughput for the first user. The scheduling circuitry determines a revised resource allocation and repackages the data. In the illustrated configuration, the revised allocation for the first user 64 comprises the first two symbols for resource blocks RB5 to RB 15. In other words, a greater range of frequency resources has been provided to the first user but over a shorter time range (using fewer symbols). The required throughput is achieved through a combination of an increased modulation coding scheme (MCS) to allow a greater amount of information to be transmitted per resource and be trading time resources for frequency resources. The portion of the power budget for the first user is distributed over the twelve resource blocks in the revised allocation for the first user 64 rather than the eight resource blocks of the initial allocation for the first user 60. Because the portion of the total transmission power budget in the revised allocation for the first user 64 is spread over fewer resources, the amplifier may be operated in a more efficient power region resulting in greater overall efficiency and requiring less input power over the revised allocation of the first user 64. The total amount of resources allocated to the second user in the revised allocation of the second user 66 is identical to the total amount of resources provided in the initial allocation of the second user 62. However, a different range of frequency resources have been allocated to the second user in the revised resource allocation. The revised allocation means that neither the first user nor the second user are making use of the third and fourth symbols. Hence, during the third and fourth sub-windows of time, there is no data to be transmitted and symbol blanking can be used to reduce the input power drawn by the amplification circuitry during these sub-windows.

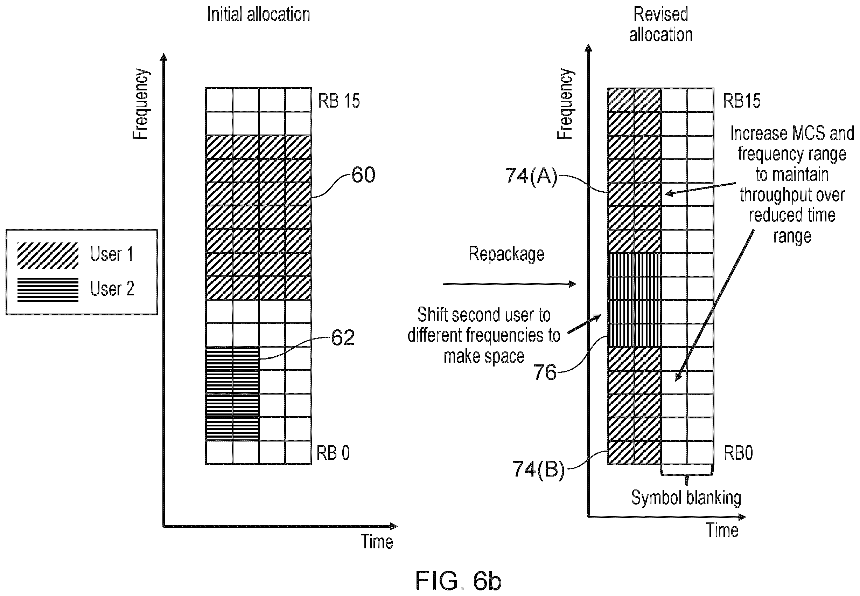

Figure 6b schematically illustrates an alternative revised allocation that may be provided in some configurations. Whilst the revised resource allocation of figure 6a is provided with a contiguous range of frequencies for each of the first user and the second user, this will not always be the case. Figure 6b schematically illustrates a same initial resource allocation as the one provided in figure 6a. However, the revised allocation for the first user 74 comprises the first two symbols for resource blocks RB0 to RB4 and RB9 to RB15. As in the case of figure 6a, a greater range of frequency resources has been provided to the first user but over a shorter time range (using fewer symbols). The required throughput is achieved through a combination of an increased modulation coding scheme (MCS) to allow a greater amount of information to be transmitted per resource and be trading time resources for frequency resources. The portion of the power budget for the first user is distributed over the twelve resource blocks in the revised allocation for the first user 74 rather than the eight resource blocks of the initial allocation for the first user 60. Because the portion of the total transmission power budget in the revised allocation for the first user 74 is spread over fewer resources, the amplifier may be operated in a more efficient power region resulting in greater overall efficiency and requiring less input power over the revised allocation of the first user 74. The total amount of resources allocated to the second user in the revised allocation of the second user 76 is identical to the total amount of resources provided in the initial allocation of the second user 62. However, a different range of frequency resources have been allocated to the second user in the revised resource allocation. As in the case of figure 6a, the revised allocation means that neither the first user nor the second user are making use of the third and fourth symbols. Hence, during the third and fourth sub-windows of time, there is no data to be transmitted and symbol blanking can be used to reduce the input power drawn by the amplification circuitry during these sub-windows.

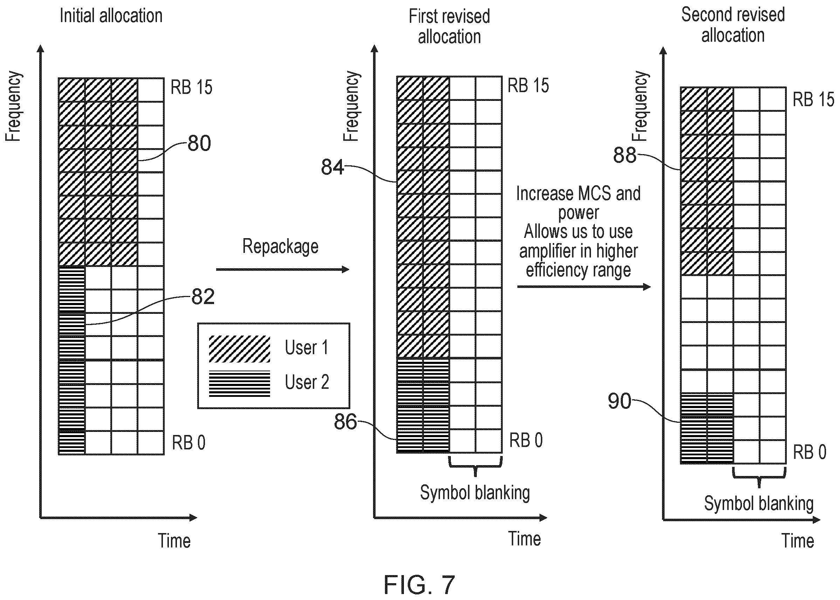

Figure 7 schematically illustrates a combination of techniques for determining a revised resource allocation. The scheduling circuitry receives an initial resource allocation for a first user 80 and an initial resource allocation for a second user 82. The initial allocation for the first user comprises an allocation of a region of resources spanning three symbols in time and resource blocks RB8 - RB15 in frequency. The initial allocation for the second user comprises an allocation of a region of resources spanning one symbol in time and resource blocks RB0 to RB7 in frequency. The resource blocks are initially repackaged to define a first revised allocation in which the first revised allocation for the first user 84 and the first revised allocation for the second user 86 span a region of resources comprising only the first two symbols. In particular, the first revised allocation for the first user 84 comprises resource blocks RB5 to RB15 and spans the first two symbols in time, and the first revised allocation for the second user 86 comprises resource blocks RB0 to RB4 and spans the first two symbols in time. It is noted that the total amount of resources required for each of the first user and the second user has not changed in determining the first revised allocation. **In** other words, the transmission power of the initial allocation of the first user 80 is the same as the transmission power of the first revised allocation of the first user 84, and the transmission power of the initial allocation of the second user 82 is the same as the transmission power for the first revised allocation of the second user 86. Using this repackaging, the amplification circuitry is able to make use of symbol blanking in the third and fourth time slots and, hence, is able to reduce the overall input power drawn by the amplification circuitry. As an alternative resource allocation, the modulation cording scheme (MCS) associated with each of the first user and the second user may be increased. Increasing the modulation coding scheme allows a greater amount of data to be transmitted using a smaller amount of resources. By increasing the MCS, the second revised allocation for the first user 88 spans a region of resources spanning only the first two symbols and resource blocks RB8-RB15, and the second revised allocation for the second user 90 spans a region of resources spanning only the first two symbols and resource blocks RB0-RB2. In addition to allowing symbol blanking, the second revised allocation has the advantage that the frequency ranges allocated to the users may be selected so as to avoid regions of the frequency spectrum in which the quality of the transmission is poor. Alternatively, or in addition, the second revised allocation provides a region of resources that could be used to accommodate downlink data for a third user.

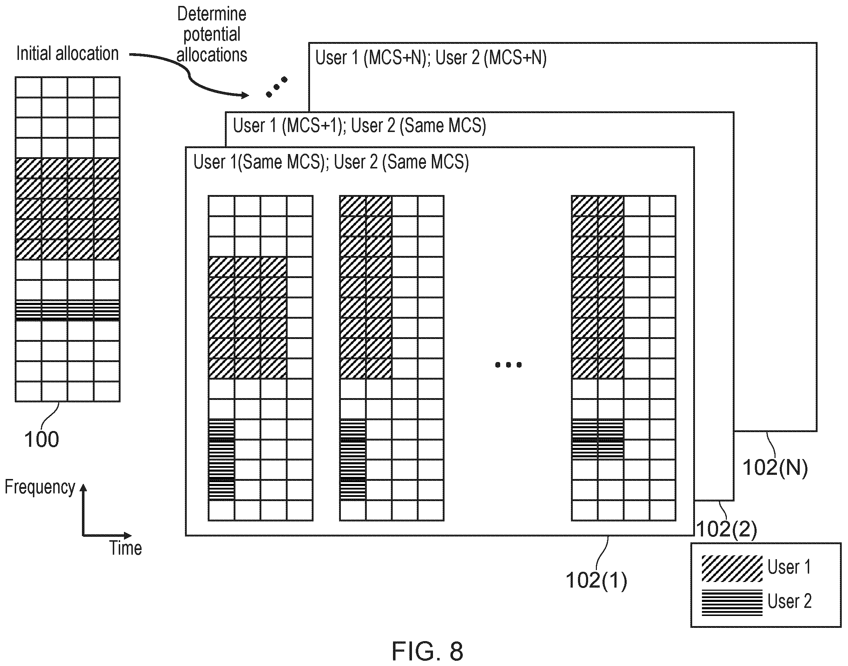

Figure 8 schematically illustrates a method by which the revised resource allocation could be determined. The scheduling circuitry is provided with an initial allocation 100. The initial allocation identifies an initial allocation of resources for a first user and a second user. The scheduling circuitry receives the initial allocation and determines all possible potential allocations 102. The scheduling circuitry considers all possible variations in modulation coding scheme, frequency resource allocation and time resource allocation. For example, the scheduling circuitry determines a first set of potential allocations 102(1) having the same modulation coding scheme for each of the first user and the second user, a second set of potential allocations 102(2) having the same modulation coding scheme for the second user and an increased modulation coding scheme for the first user, ... and a final set of potential allocations 102(N) having an increased modulation coding scheme for each of the first user and the second user. The method set out in figure 8 therefore provides a full set of potential allocations from which a revised allocation can be selected.

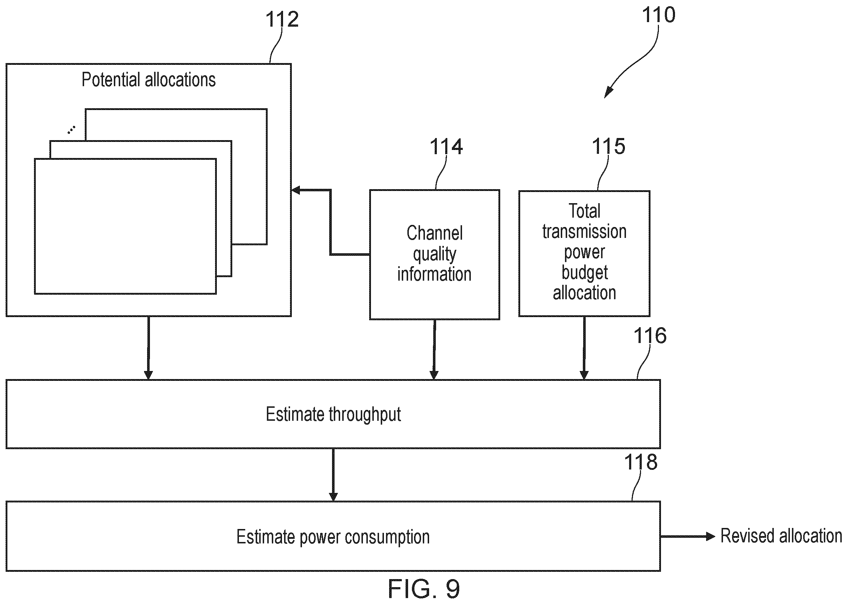

Figure 9 schematically illustrates details of scheduling circuitry 110 according to some configurations of the present techniques. The scheduling circuitry 110 receives a set of potential allocations 112, for example the complete set of all possible potential allocations described in relation to figure 8. The scheduling circuitry 110 also receives a total transmission power budget allocation 115 comprising an indication of a portion of a total transmission power budget that is allocated to each of the first user and the second user. The scheduling circuitry 110 also receives channel quality information relating to different regions of the frequency spectrum. The scheduling circuitry 110 comprises throughput estimation circuitry 116 which identifies, based on the portion of the power budget allocated to each user and the signal quality associated with the frequency resources, which allocations of the potential allocations 112 can be utilised, e.g., which allocations use an appropriate modulation coding scheme based on the available signal quality. The throughput estimation circuitry 116 also determines which allocations of the plurality of potential allocations 112 have sufficient throughput to meet the data requirements of the initial allocation. The throughput estimation circuitry 116 passes candidate allocations of the plurality of potential allocations 112 to power estimation circuitry 118 which estimates a total input power required for each of the candidate allocations and selects as the revised allocation, the potential allocation having an appropriate modulation coding scheme with sufficient throughput that requires the least input power. In this way the revised allocation can provide a significant power saving during transmission. The power consumption estimation circuitry 118 outputs the revised allocation.

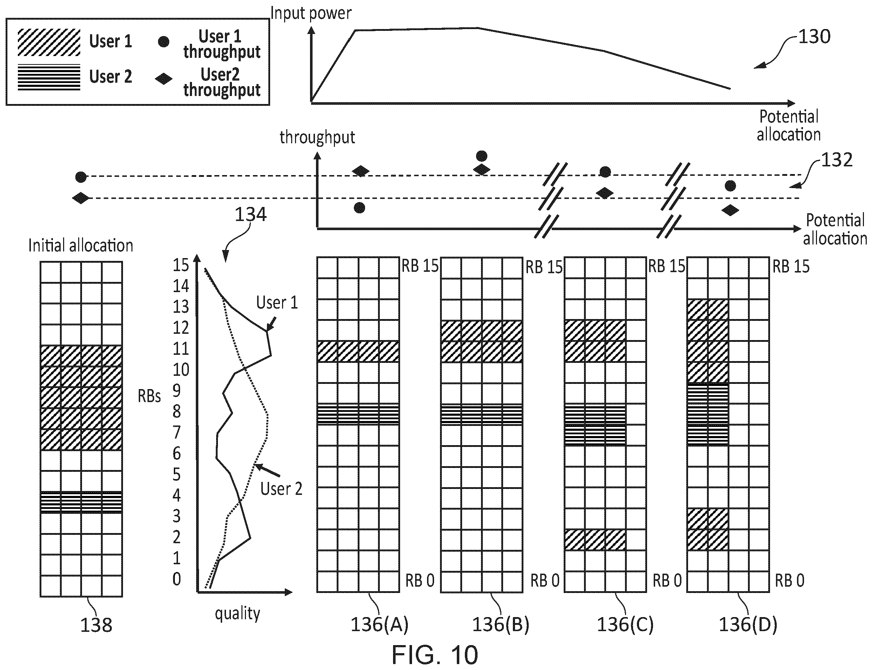

Figure 10 schematically illustrates an alternative algorithm for determining the revised allocation of resources. As in the configuration illustrated in figure 8, an initial allocation of resources 138 is received by the scheduling circuitry. The scheduling circuitry also receives an indication of the signal quality 134. The indication of the signal quality 134 comprises an indication of the signal quality for the first user and the second user. As the first user and the second user may each operate user equipment at a different spatial location at a different distance from the apparatus, with different intervening objects partially obscuring portions of the signal, and/or with different sources of noise present, each of the first user and the second user may perceive a different signal quality. These different signal qualities are reported back to the apparatus (the base station) as signal quality information 134. The signal quality information 134 may be provided as a signal to interference and noise ratio.

The scheduling circuitry also receives an indication of the portion of the total transmission power budget that is allocated to each of the first user and the second user. As discussed, the portion of the power budget allocated to each user may be based on a fair share policy and/or may be allocated as a proportional fair share based on the amount of throughput required by each of the users. The scheduling circuitry receives this information and proceeds to determine a plurality of potential allocations. The potential allocations are provided by considering each user in turn (starting from a selected one of the first user and the second user which may be determined, e.g., randomly, based on throughput requirements of each user, or by alternating between users on a per slot or per frame basis). In an initial allocation the selected user is allocated the resource block having a greatest signal quality for that user. In the illustrated configuration the first user is allocated first. The signal quality information 134 for the first user indicates that resource block RB 11 is the resource block having the greatest signal quality. The first potential resource block allocation 136(A) is therefore provided having a resource block allocation in which all four symbols of RB11 are allocated to user 1. In general, for a resource allocation to meet the throughput requirements for all users, at least some resources must be allocated to each user. Therefore, the next user, user 2, has a resource block allocated based on the signal quality information 134 for user 2. In the illustrated configuration, the resource block having the greatest signal quality for user 2 is RB8. As this block is unallocated, RB8 can then be allocated to user 2.

Based on the channel quality information for each user, an appropriate maximum modulation coding scheme can be selected. Combining the modulation coding scheme with the resource allocation a throughput 132 can be determined for the first potential resource block allocation 136(A). The throughput 132 for each of the users can then be compared against the initial allocation to determine if the allocation includes sufficient resources to provide the necessary throughput. In the case of the first potential resource allocation 136(A), it can be seen that there are sufficient resources for user 2 but there are not sufficient resources for user 1. Allocation of resources then continues for user 1 only (as there would be no purpose to adding additional resources to user 2 at this stage). In this way, a second potential resource allocation 136(B) can be derived. In the second potential resource allocation 136(B), the first user has been allocated resource block RB12. The throughput for this allocation can then be determined, in the same way as for the first potential resource allocation 136(A). Firstly, an appropriate modulation coding scheme is determined for each user. In the case of the second user, the modulation coding scheme is the maximum modulation coding scheme that can be supported based on the signal quality information relating to resource block RB8 (because this is the only utilised resource block). In the case of the first user, the modulation coding scheme is the maximum modulation coding scheme that can be supported based on the resource block of lowest signal quality, in this case the resource block RB12. Based on the modulation coding scheme, the throughput for each of the first user and the second user can be determined. In the illustrated configuration the second potential resource allocation 136(B) is able to provide sufficient resources for each of the first user and the second user.

The scheduling circuitry then considers possible resource allocations in which only a subset of the symbols is used. For example, the third potential resource allocation 136(C) is derived through the same sequential process as was used to derive potential resource allocation 136(B) with intervening potential resource allocations that do not meet the throughput requirements not illustrated. The third potential resource allocation 136(C) includes an allocation of resource blocks RB2, RB11, and RB12 to the first user and resource blocks RB7 and RB8 to the second user. The appropriate modulation coding scheme to use for each user is obtained using the channel quality information 134 associated with the resource block allocated to that user having the lowest channel quality in combination with the portion of the total transmission power budget allocated to that user. In the case of user 1, the resource block of lowest channel quality is resource block RB2. Hence, the modulation coding scheme used for user 1 is determined based on the portion of the total transmission power budget allocated to user 1 in combination with the channel quality information associated with resource block RB2 for user 1. The determination may be based on one or more lookups in one or more predefined tables. Alternatively, the determination may be made based on one or more predefined functions. In the case of user 2, the resource block of lowest channel quality is resource block RB7. Hence, the modulation coding scheme used for user 2 is determined based on the portion of the total transmission power budget allocated to user 2 in combination with the channel quality information associated with resource block RB7 for user 2. As for the first user, the determination may be based on one or more lookups in one or more predefined tables. Alternatively, the determination may be made based on one or more predefined functions. The throughput that can be obtained by the third potential allocation 136(C) is greater than the throughput obtained from the initial allocation. Hence, no further allocations using three of the four symbols are considered.

The scheduling circuitry then further reduces the subset of the symbols that can be allocated. For example, the fourth potential resource allocation 136(D) is derived through the same sequential process as was used to derive the second potential resource allocation 136(B) and the third potential resource allocation 136(C) with intervening potential resource allocations that do not meet the throughput requirements not illustrated. The fourth potential resource allocation 136(D) indicates a highest throughput resource allocation that can be achieved using only the first two symbols. In particular, it is noted that as the resource blocks assigned to a given user increase, the signal quality 134 for the lowest quality channel decreases resulting in lower modulation coding scheme. In other words, the modulation coding scheme for a user is limited by the channel of poorest quality. Hence, the maximum throughput available to a user for a given number of unused symbols will be non-monotonic in relation to the number of assigned resource blocks. Hence, as the number of resource blocks increases, the throughput that can be obtained can begin to drop off as the amount of data that can be encoded into the higher quality channels is reduced. In the fourth potential resource allocation 136(D), the maximum throughput that can be achieved is less than the throughput achieved by the initial allocation. As a result, there is no need to consider allocations utilising only the first symbol as it can be inferred from the fourth potential allocation that these potential allocations will never have sufficient throughput.

For each of the potential allocations that meet the throughput requirements, e.g., the second potential resource block allocation 136(B), the third potential resource block allocation 136(C), and further unillustrated potential resource block allocations, the input power requirements necessary to transmit data using those resource allocations is calculated. The input power requirement 130 for the illustrated potential configurations 136 can be seen to decrease as the potential resource allocation utilises fewer of the symbols. As a result, the optimal choice of the illustrated potential resource allocations 136 is the third potential resource allocation 136(C) which can be selected as the revised resource block allocation.

The techniques illustrated in figures 5 to 10 gave been illustrated for two users. However, it will be readily apparent to the skilled person that the same method could be extended to a greater number of users competing for the available resources. Furthermore, the same techniques could be used to allocate resources to a single user. It will also be readily apparent that, whilst two possible algorithms have been described for allocating resources, alternative algorithms could be utilised to determine a revised frequency allocation of at least one set of resources to achieve a reduced power consumption.

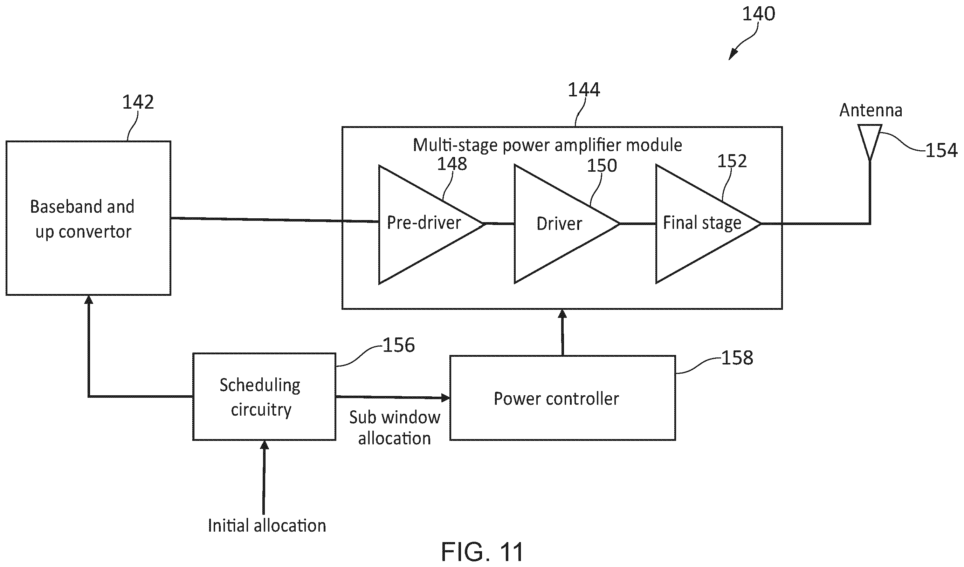

Figure 11 schematically illustrates amplification circuitry 140 that may be provided in some configurations of the present techniques. The amplification circuitry 140 comprises a multi-stage power amplifier module 144, a baseband and up-convertor module 142, scheduling circuitry 156, a power controller 158, and an antenna 154. The scheduling circuitry 156 receives an initial allocation of resources and derives a revised allocation of resources according to the techniques described above. The multi-stage power amplifier includes a pre-driver 148, a driver 150 and a final stage amplifier 152. Each stage of the multi-stage power amplifier module 144 may comprise a single amplification element, for example, a transistor. The multi-stages of the multi-stage power amplifier each work to amplify the received signal to a desired amplitude for transmission by the antenna 154. The power controller 158 is configured to control the input power that is available to the multi-stage power amplifier module 144. The power controller 158 may directly control the power to each stage of the multi-stage power amplifier module in addition or as an alternative to providing a master control of the input power received to the multi-stage power amplifier module 144. The power controller receives a sub-window allocation from the scheduling circuitry. The sub-window allocation identifies times during which the multi-stage power amplifier needs to be switched on, e.g., because there is information being provided at the data input of the multi-stage power amplifier module144 that needs to be boosted for transmission, and which times during which the multi-stage power amplifier module 144 does not need to be switched on (or otherwise may run at a reduced power), e.g., because the data input of the multi-stage power amplifier module 144 is only receiving the carrier signal and is not receiving any data. The baseband and up-convertor circuit 142 receives the revised resource allocation from the scheduling circuitry and generates a signal to be provided at the data input of the power amplifier. The signal comprises a carrier wave modulated with the data to be transmitted according to the revised resource allocation.

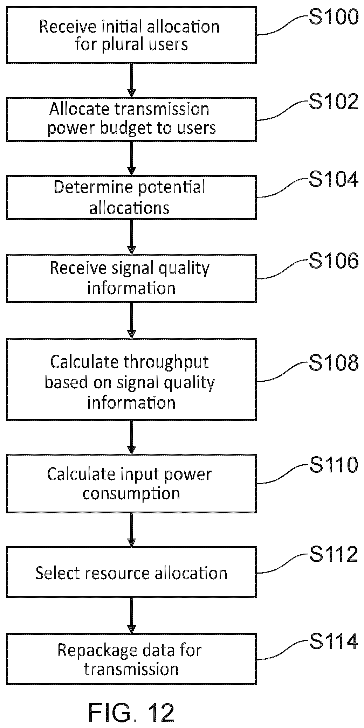

Figure 12 schematically illustrates a sequence of steps carried out according to some configurations of the present techniques. Flow begins at step S100 where an initial allocation of resources for a plurality of users is received. Flow then proceeds to step S102 where a transmission power budget is allocated to the users, for example, based on a total throughput requirement of each of the users and/or according to a fair share policy. Flow then proceeds to step S104 where a plurality of potential allocations is determined. The plurality of potential allocations may comprise all possible allocations or a subset of all possible allocations as discussed above. Flow then proceeds to step S106 where signal quality information (e.g., a signal to interference and noise ratio) is received. Flow then proceeds to step s108 where a potential throughput of each of the potential resource allocations is derived based on the signal quality information. Flow then proceeds to step S110 where an input power consumption required for the potential resource allocations is determined. Flow then proceeds to step S112 where one of the plurality of potential resource allocations is selected. Flow then proceeds to step S114 where the data is repackaged for transmission based on the selected one of the potential resource allocations.

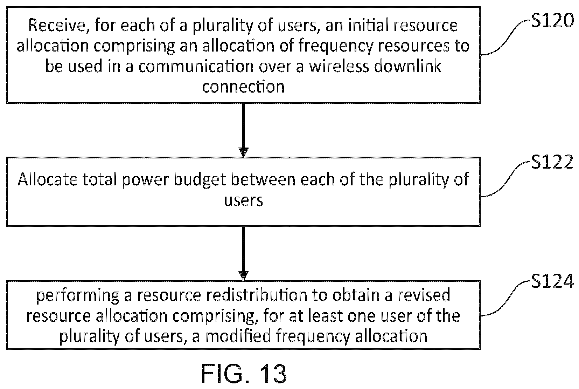

Figure 13 schematically illustrates a sequence of steps carried out according to some configurations of the present techniques. Flow begins at step S120 where, for each of a plurality of users, an initial resource allocation is received. The initial resource allocation comprises an allocation of frequency resources to be used in a communication over a wireless downlink connection. Flow then proceeds to step s122 where a total power budget is allocated between each of the plurality of users. Flow then proceeds to step S124 where a resource redistribution is performed to obtain a revised resource allocation comprising, for at least one user of the plurality of users, a modified frequency allocation.

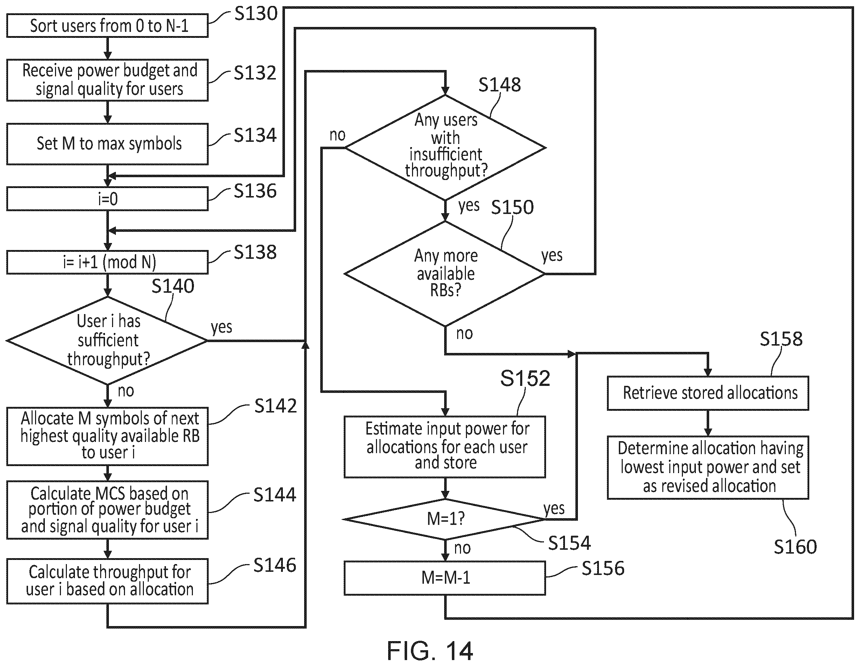

Figure 14 schematically illustrates a sequence of steps carried out by scheduling circuitry according to some configurations of the present techniques. As will be described in detail below, during the resource allocation, the scheduling circuitry determines a set of possible allocations for the users. The allocations are determined in order of decreasing numbers of symbols (sub windows in time, denoted by M) allocated to each resource block. For each value of M, a resource allocation is chosen that by sequentially allocating resources to the users until the throughput requirements for those users are met. Once a resource allocation has been determined for each possible value for M, or when it is no longer possible to meet the throughput requirements, the scheduling circuitry selects the allocation requiring the lowest input power as the revised resource allocation.

Flow begins at step S130 where a plurality of users is sorted into an order from 0 to N-1 where N is the number of users. The sorting of the users is to determine an order of allocation for resource blocks to those users. The sorting may be performed randomly, according to throughput requirements, or by sequentially working through different possible orderings of users so that each user takes a turn at being the sequentially first user to be allocated resources. Flow then proceeds to step S132 where a portion of a total transmission power budget and a signal quality associated with each of the users is received by the scheduling circuitry. Flow then proceeds to step S134 where a variable M is set to the maximum number of symbols (sub windows of time) that are available. Flow then proceeds to step S136 where the variable i is set to 0.

Flow then proceeds to step S138 where i is incremented. If, when incremented i is equal to N, then i is set to zero. In other words, i is set equal to i+1 modulo N. Flow then proceeds to step S140 where it is determined whether user i has sufficient throughput. If, at step S140, it is determined that user i has sufficient throughput, then no further resources are allocated to that user and flow proceeds to step S148. If, at step S140, it is determined that user i does not have sufficient throughput, then flow proceeds to step S142 where a resource block is allocated to user i. The resource block that is allocated is selected as the resource block indicated as being of highest signal quality for that user that has not already been allocated. For the allocated resource block, the first M sub-windows are allocated to the user. Flow then proceeds to step S144 where an appropriate modulation coding scheme is selected based on the portion of the total transmission power budget available to the user and the signal quality of that resource block for that user. Flow then proceeds to step S146 where the throughput for that user is calculated before flow proceeds to step S148.

At step S148, it is determined whether there are any users with insufficient throughput. If, at step S148, it is determined that there are users with insufficient throughput, then flow proceeds to step S150. If, at step S148, it is determined that there are no more users with insufficient throughput, then flow proceeds to step S152. At step S150, it is determined if there are any more available resource blocks. If, at step S150, it is determined that there are more available resource blocks, then flow returns to step S138. If, at step S150, it is determined that there are no more available resource blocks, then flow proceeds to step S158. At step S152, the input power required for the allocation for all users is determined and the resource allocation and the power requirements are stored. Flow then proceeds to step S154 where it is determined if M is equal to 1. If, at step S154, it is determined that M is equal to 1, then it is determined that there can be no further potential resource allocations (it is not possible to have a resource allocation where no resources are allocated in time) and flow proceeds to step S158. It, at step S154, it is determined that M is not equal to 1, then flow proceeds to step S156 where M is decremented before flow returns to step S136. At step S158 the set of stored allocations are retrieved. Flow then proceeds to step S160 where the potential allocation having a lowest input power is selected as the revised allocation.

In brief overall summary there is provided an apparatus and a method. The apparatus is provided with receiving circuitry to receive, for each of a plurality of users, an initial resource allocation comprising an allocation of frequency resources to be used in a communication over a wireless downlink connection. The apparatus is also provided with transmission power budget allocation circuitry to allocate a portion of a total transmission power budget to each of the plurality of users. The apparatus is also provided with scheduling circuitry to perform a resource redistribution to obtain a revised resource allocation based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation.

It will be readily apparent to the skilled person that the techniques described herein for allocating resource blocks could equally be applied to the allocation of resource block groups to a plurality of users.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

In the present application, lists of features preceded with the phrase "at least one of" mean that any one or more of those features can be provided either individually or in combination. For example, "at least one of: [A], [B] and [C]" encompasses any of the following options: A alone (without B or C), B alone (without A or C), C alone (without A or B), A and B in combination (without C), A and C in combination (without B), B and C in combination (without A), or A, B and C in combination.

Some configurations of the present technique are described in the following clauses:
Clause 1. An apparatus comprising:
   receiving circuitry configured to receive, for each of a plurality of users, an initial resource allocation comprising an allocation of frequency resources to be used in a communication over a wireless downlink connection;
   transmission power budget allocation circuitry configured to allocate a portion of a total transmission power budget to each of the plurality of users; and
   scheduling circuitry configured to perform a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.
Clause 2. The apparatus of clause 1, wherein:
   the initial resource allocation comprises, for each of the plurality of users, an allocation of resources over a predetermined frequency range; and
   the scheduling circuitry is configured to identify available frequency resources within the predetermined frequency range, and perform the resource redistribution to reallocate at least some resources allocated in the initial resource allocation to utilise the available frequency resources.
Clause 3. The apparatus of clause 2, wherein the initial resource allocation comprises, for each of the plurality of users, an allocation of resources over a predetermined time window comprising a plurality of sub windows; and
   the scheduling circuitry is responsive to the available frequency resources meeting a threshold condition, to perform the resource redistribution to free up at least one sub window of the plurality of sub windows for all of the plurality of users.
Clause 4. The apparatus of clause 3, comprising amplification circuitry configured to amplify a signal for transmission, the signal comprising data from each of the plurality of users according to the revised resource allocation,
   wherein the amplifier is configured to draw a reduced input power during the at least one sub window.
Clause 5. The apparatus of clause 4, wherein the amplification circuitry is coupled to the scheduling circuitry and the scheduling circuitry is configured to provide the amplification circuitry with a sub window allocation identifying the at least one sub window.
Clause 6. The apparatus of any preceding clause, wherein:
   the initial resource allocation comprises modulation coding scheme information identifying an initial modulation coding scheme associated with each of the plurality of users; and
   the scheduling circuitry is configured to select a revised modulation coding scheme for at least the modified frequency allocation.
Clause 7. The apparatus of clause 6, wherein the scheduling circuitry is configured to select, as the different range of frequencies, a smaller range of frequencies than the allocation of frequency resources allocated to the at least one user in the initial resource allocation.
Clause 8. The apparatus of clause 6, wherein the scheduling circuitry is configured to select, as the different range of frequencies, a larger range of frequencies than the allocation of frequency resources allocated to the at least one user in the initial resource allocation.
Clause 9. The apparatus of clause 7 or clause 8, wherein the revised modulated coding scheme encodes a greater amount of information per frequency unit than the initial modulation coding scheme allocated to the at least one user in the initial resource allocation.
Clause 10. The apparatus of any of clauses 6 to 8, wherein the revised modulation coding scheme is determined based on simultaneous consideration of both of a quality of the wireless downlink connection and a transmission power spectrum distribution of the portion of the total transmission power budget allocated to each of the plurality of users.
Clause 11. The apparatus of clause 10, wherein the scheduling circuitry is configured to select the revised resource allocation from a plurality of potential resource allocations each defining a corresponding modified frequency allocation for each of the plurality of users.
Clause 12. The apparatus of clause 11, wherein the plurality of potential resource allocations comprise all possible resource allocations.
Clause 13. The apparatus of clause 11, wherein:
   the quality of the wireless downlink connection identifies a quality of different regions of an available frequency range; and
   the plurality of potential resource allocations comprises a first potential resource allocation comprising one of the different regions having a highest quality, and a sequence of further potential resource allocations, each one of the sequence of further potential resource allocations comprising a sequentially next one of the different regions having a next highest quality.
Clause 14. The apparatus of any of clauses 11 to 13, wherein:
   the scheduling circuitry is configured to estimate, for each of the plurality of potential resource allocations, a total communication throughput based on a corresponding transmission power spectrum distribution of the portion of the total transmission power budget allocated to each of the plurality of users across the corresponding modified frequency allocation; and
   the scheduling circuitry is configured to select, as the revised resource allocation, one of the plurality of potential resource allocations having, for each of the plurality of users, an estimated total communication throughput greater than or equal to an estimate throughput of the initial resource allocation.
Clause 15. The apparatus of clause 14, wherein the scheduling circuitry is further configured to estimate, for each of the plurality of potential resource allocations, the communication throughput based on the modulation coding scheme associated with the corresponding modified frequency allocation.
Clause 16. The apparatus of any of clauses 10 to 15, wherein the information indicative of a quality of the wireless connection comprises a plurality of signal to interference and noise ratios, each indicative of a reference signal received from a respective communication device associated with a respective one of the plurality of users.
Clause 17. The apparatus of any of clauses 14 to 16, wherein the scheduling circuitry is configured to select, as the revised resource allocation, one of the plurality of potential resource allocations having a greatest power efficiency.
Clause 18. The apparatus of any preceding clause, comprising communication circuitry configured to transmit the communication for each of the plurality of users according to the revised resource allocation.
Clause 19. The apparatus of any preceding clause, comprising a plurality of beamforming antenna, wherein the scheduling circuitry is configured to perform the resource redistribution for each of the plurality of antenna.
Clause 20. The apparatus of any preceding clause, wherein the transmission power budget allocation circuitry is configured to allocate the total transmission power budged based on the data throughput requirements of each of the plurality of users.
Clause 21. The apparatus of any preceding clause, wherein the initial resource allocation identifies, as the allocation of frequency resources, a set of downlink resource blocks allocated for each of the plurality of users.
Clause 22. The apparatus of clause 21, wherein the set of downlink resource blocks is one of:
   a contiguous set of the downlink resource blocks; and
   a non-contiguous set of the downlink resource blocks.
Clause 23. The apparatus of clause 21 or clause 22, wherein the modified frequency allocation comprises, for each of the plurality of users, one of:
   a modified set of contiguous downlink resource blocks; and
   a modified set of non-contiguous downlink resource blocks.
Clause 24. A method comprising:
   receiving, for each of a plurality of users, an initial resource allocation comprising an allocation of frequency resources to be used in a communication over a wireless downlink connection;
   allocating a portion of a total transmission power budget to each of the plurality of users; and
   performing a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.
Clause 25. An apparatus comprising:
   means for receiving, for each of a plurality of users, an initial resource allocation comprising an allocation of frequency resources to be used in a communication over a wireless downlink connection;
   means for allocating a portion of a total transmission power budget to each of the plurality of users; and
   means for performing a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.

Although illustrative configurations of the invention have been described in detail herein with reference to the accompanying drawings, it is to be understood that the invention is not limited to those precise configurations, and that various changes, additions and modifications can be effected therein by one skilled in the art without departing from the scope of the invention as defined by the appended claims. For example, various combinations of the features of the dependent claims could be made with the features of the independent claims without departing from the scope of the present invention.

## Claims

1. An apparatus comprising:
receiving circuitry configured to receive, for each of a plurality of users, an initial resource allocation comprising an allocation of frequency resources to be used in a communication over a wireless downlink connection;
transmission power budget allocation circuitry configured to allocate a portion of a total transmission power budget to each of the plurality of users; and
scheduling circuitry configured to perform a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.

2. The apparatus of claim 1, wherein:
the initial resource allocation comprises, for each of the plurality of users, an allocation of resources over a predetermined frequency range; and
the scheduling circuitry is configured to identify available frequency resources within the predetermined frequency range, and perform the resource redistribution to reallocate at least some resources allocated in the initial resource allocation to utilise the available frequency resources.

3. The apparatus of claim 2, wherein the initial resource allocation comprises, for each of the plurality of users, an allocation of resources over a predetermined time window comprising a plurality of sub windows; and
the scheduling circuitry is responsive to the available frequency resources meeting a threshold condition, to perform the resource redistribution to free up at least one sub window of the plurality of sub windows for all of the plurality of users.

4. The apparatus of claim 3, comprising amplification circuitry configured to amplify a signal for transmission, the signal comprising data from each of the plurality of users according to the revised resource allocation,
wherein the amplifier is configured to draw a reduced input power during the at least one sub window.

5. The apparatus of any preceding claim, wherein:
the initial resource allocation comprises modulation coding scheme information identifying an initial modulation coding scheme associated with each of the plurality of users; and
the scheduling circuitry is configured to select a revised modulation coding scheme for at least the modified frequency allocation.

6. The apparatus of claim 6, wherein the scheduling circuitry is configured to select, as the different range of frequencies, one of:
a smaller range of frequencies than the allocation of frequency resources allocated to the at least one user in the initial resource allocation; and
a larger range of frequencies than the allocation of frequency resources allocated to the at least one user in the initial resource allocation.

7. The apparatus of claim 6, wherein the revised modulated coding scheme encodes a greater amount of information per frequency unit than the initial modulation coding scheme allocated to the at least one user in the initial resource allocation.

8. The apparatus of claim 5 or claim 6, wherein the revised modulation coding scheme is determined based on simultaneous consideration of both of a quality of the wireless downlink connection and a transmission power spectrum distribution of the portion of the total transmission power budget allocated to each of the plurality of users.

9. The apparatus of claim 8, wherein the scheduling circuitry is configured to select the revised resource allocation from a plurality of potential resource allocations each defining a corresponding modified frequency allocation for each of the plurality of users.

10. The apparatus of claim 9, wherein the plurality of potential resource allocations comprise all possible resource allocations.

11. The apparatus of claim 9, wherein:
the quality of the wireless downlink connection identifies a quality of different regions of an available frequency range; and
the plurality of potential resource allocations comprises a first potential resource allocation comprising one of the different regions having a highest quality, and a sequence of further potential resource allocations, each one of the sequence of further potential resource allocations comprising a sequentially next one of the different regions having a next highest quality.

12. The apparatus of any of claims 9 to 11, wherein:
the scheduling circuitry is configured to estimate, for each of the plurality of potential resource allocations, a total communication throughput based on a corresponding transmission power spectrum distribution of the portion of the total transmission power budget allocated to each of the plurality of users across the corresponding modified frequency allocation; and
the scheduling circuitry is configured to select, as the revised resource allocation, one of the plurality of potential resource allocations having, for each of the plurality of users, an estimated total communication throughput greater than or equal to an estimate throughput of the initial resource allocation.

13. The apparatus of claim 12, wherein the scheduling circuitry is further configured to estimate, for each of the plurality of potential resource allocations, the communication throughput based on the modulation coding scheme associated with the corresponding modified frequency allocation.

14. A method comprising:
receiving, for each of a plurality of users, an initial resource allocation comprising an allocation of frequency resources to be used in a communication over a wireless downlink connection;
allocating a portion of a total transmission power budget to each of the plurality of users; and
performing a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.

15. An apparatus comprising:
means for receiving, for each of a plurality of users, an initial resource allocation comprising an allocation of frequency resources to be used in a communication over a wireless downlink connection;
means for allocating a portion of a total transmission power budget to each of the plurality of users; and
means for performing a resource redistribution to obtain a revised resource allocation for the plurality of users based on the portion of the total transmission power budget allocated to each of the plurality of users, the revised resource allocation comprising, for at least one user of the plurality of users, a modified frequency allocation corresponding to a different range of frequencies than the allocation of frequency resources comprised in the initial resource allocation for the at least one user.
